(19) Europäisches Patentamt
European Patent Office
Office européen des brevets

(11) EP 0 441 196 B1

(12) EUROPÄISCHE PATENTSCHRIFT

(45) Veröffentlichungstag und Bekanntmachung des Hinweises auf die Patenterteilung:
**07.07.1999 Patentblatt 1999/27**

(51) Int Cl.[6]: **C08G 18/66**, C14C 11/00

(21) Anmeldenummer: **91100943.9**

(22) Anmeldetag: **25.01.1991**

(54) **Wässrige Polyurethanzubereitungen**

Aqueous polyurethane preparations

Préparations aqueuses de polyuréthane

(84) Benannte Vertragsstaaten:
**AT BE DE ES FR GB IT NL**

(30) Priorität: **06.02.1990 DE 4003422**

(43) Veröffentlichungstag der Anmeldung:
**14.08.1991 Patentblatt 1991/33**

(73) Patentinhaber: **BASF Aktiengesellschaft
67063 Ludwigshafen (DE)**

(72) Erfinder:
- **Weyland, Peter, Dr.
W-6710 Frankenthal (DE)**
- **Haeberle, Karl, Dr.
W-6730 Neustadt (DE)**
- **Treiber, Reinhard
W-6906 Leimen (DE)**

(56) Entgegenhaltungen:
**DE-A- 3 641 494** **DE-C- 3 625 442**
**US-A- 4 895 894**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft wäßrige Polyurethanzubereitungen, enthaltend 10 bis 60 Gew.% wenigstens eines Polyurethans A, das aus

a) wenigstens einem organischen Diisocyanat oder einem eine arithmetisch mittlere NCO-Funktionalität von 1,9 bis 2,3 aufweisenden Gemisch aus organischen Isocyanaten [Monomere I],

b) wenigstens einem zweiwertigen Polyetheralkohol eines zahlenmittleren Molekulargewichtes von 500 bis 5000 oder einem einer arithmetisch mittlere Funktionalität an alkoholischen OH-Gruppen von 1,6 bis 2,3 aufweisenden Gemisch aus Polyetheralkoholen eines zahlenmittleren Molekulargewichtes von 500 bis 5000 [Monomere II],

c) wenigstens einem 1 bis 3 alkoholische OH-Gruppen sowie wenigstens eine ionogene Gruppe enthaltenden Alkohol [Monomere III],

d) keinem, einem oder mehreren zweiwertigen Alkoholen eines zahlenmittleren Molekulargewichtes von 62 bis 499 oder einem eine arithmetisch mittlere Funktionalität an alkoholischen OH-Gruppen von 1,9 bis 2,3 aufweisenden Gemisch aus Alkoholen eines zahlenmittleren Molekulargewichtes von 62 bis 499 [Monomere IV] und

e) keinem, einem oder mehreren einwertigen Polyetheralkoholen [Monomere V]

mit der Maßgabe aufgebaut ist, daß die Mengen der eingebauten Monomeren I bis V so bemessen sind, daß die OH/NCO-Äquivalentverhältnisse für die eingebauten

| | |
|---|---|
| Monomere II / Monomere I | 0,2 bis 0,6 |
| Monomere III / Monomere I | 0,2 bis 0,8 |
| Monomere IV / Monomere I | 0 bis 0,2 und |
| Monomere V / Monomere I | 0 bis 0,2 |

betragen, daß die arithmetisch mittlere Funktionalität der insgesamt eingebauten Monomeren I bis V, gemittelt über die Summe aus den NCO-Gruppen der Monomeren I und den alkoholischen OH-Gruppen der Monomeren II bis V 1,8 bis 2,3 beträgt, daß das NCO/OH-Äquivalentverhältnis für die eingebauten Monomeren I sowie die OH-Gruppen der eingebauten Monomeren II bis V 0,9 bis 1,0 beträgt, daß die Monomeren II einen Ethoxylierungsgrad von weniger als 30 Gew.% aufweisen, daß die Monomeren V einen Ethoxylierungsgrad von wenigstens 40 Gew.% aufweisen und daß pro Gramm Polyurethan A in der wäßrigen Zubereitung 0,05 bis 2 mMol ionogene Gruppen der eingebauten Monomeren III ionisiert vorliegen.

Außerdem betrifft die Erfindung das Verfahren zur Herstellung dieser Zubereitungen sowie die Verwendung dieser Zubereitungen als Haftgrundierung für Zurichtungen auf gefetteten und/oder hydrophobierten Ledern.

Als Lederzurichtung wird die Schutzschicht bezeichnet, die auf das nach der Gerbung, Fettung und/oder Hydrophobierung getrocknete Leder aufgebracht wird, um das Leder insbesondere gegen Verschmutzung und Beschädigung zu schützen oder die Oberflächeneigenschaften des Leders im Hinblick auf Eigenschaften wie Farbe oder Glanz zu modifizieren. Die Versetzung des Leders mit Fettungs- und/oder Hydrophobiermitteln verleiht dem Leder die gewünschte Weichheit sowie das gewünschte wasserabweisende Verhalten.

Unter anderem wird von einer Lederzurichtung verlangt, daß sie auf dem Leder gut haftet. Insbesondere bei stark gefetteten und/oder hydrophobierten Ledern ist die Haftung der meisten Lederzurichtsysteme jedoch nicht befriedigend. Gefragt sind daher Lederzurichthilfsmittel, die vor der eigentlichen Lederzurichtung als sogenannter Haftgrund auf das gefettete und/oder hydrophobierte Leder aufgebracht werden und die der nachfolgend aufgebrachten Lederzurichtung eine erhöhte Haftfestigkeit verleihen, ohne gleichzeitig die Wirkung der Fettung und/oder Hydrophobierung wesentlich zu mindern.

Aus der DE-C 36 25 442 sind wäßrige Dispersionen harnstoffgruppenterminierter, aliphatischer, anionischer Polyurethane bekannt, die als Haftgrundierung für Lederzurichtungen auf gefetteten und/oder hydrophobierten Ledern empfohlen werden, ohne die Wirkung der Hydrophobierung negativ zu beeinflussen. Nachteilig an diesen Dispersionen ist jedoch, daß sie zusätzlich weichmachende kurz- und/oder mittelkettige Alkyletherphosphate enthalten müssen.

In der US-A 4 895 894 werden Polyurethanzubereitungen aus organischen Diisocyanaten, einem Polyetherpolyol-Gemisch mit einer mittleren Funktionalität an alkoholischen OH-Gruppen von 1,6 bis 2,3, carboxylgruppenhaltigen Diolen und Alkylendiaminen als Lederbeschichtungsmittel beschrieben.

Die DE-A 36 41 494 offenbart die Herstellung von wasserdispergierbaren Polyurethanen, welche auch als

Lederbeschichtungsmittel empfohlen werden, durch Umsetzung von organischen Polyisocyanaten mit organischen Verbindungen mit gegenüber Isocyanatgruppen reaktionsfähigen Gruppen, Kettenverlängerungsmitteln, bestimmten Aufbaukomponenten und Dihydroxymonocarbonsäuren.

Der vorliegenden Erfindung lag daher die Bereitstellung wäßriger Polyurethanzubereitungen als Aufgabe zugrunde, die, ohne niedermolekulare Additive zu enthalten, insbesondere als Haftgrundierung für Zurichtungen auf gefetteten und/oder hydrophibierten Ledern geeignet sind, ohne die Wirkung der Fettung und/oder Hydrophobierung wesentlich zu mindern. Demgemäß wurden die eingangs definierten wäßrigen Polyurethanzubereitungen gefunden.

Als Monomere I sind insbesondere sowohl aliphatische, aromatische als auch araliphatische Diisocyanate wie Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, 1-Isocyanato-3,3,5-trimethyl-5-isocyanatomethylcyclohexan (Isophorondiisocyanat), 2,4-Diisocyanatotoluol, 2,6-Diisocyanatotoluol, Tetramethylxylylendiisocyanat, 1,4-Diisocyanatobenzol, 4,4'-Diisocyanatodiphenylmethan, p-Xylylendiisocyanat, sowie Isoprpoenyldimethyltoluylendiisocyanat von Interesse. Ferner kommen im Rahmen der Monomeren I die von diesen Diisocyanaten abgeleiteten, gegebenenfalls höherfunktionellen, Carbodiimid-, Allophanat-, Isocyanurat-, Urethan- und/oder Biuretgruppen enthaltenden Polyisocyanate sowie Monoisocyanate wie Phenylisocyanat, Cyclohexylisocyanat, Hexylisocyanat oder Dodecylisocyanat in Betracht. Bevorzugt werden 2,4- und 2,6-Diisocyanatotouluol und deren Gemische, Hexamethylendiisocyanat, 1-Isocyanator-3,3,5-trimethyl-5-isocyanatomethylcyclohexan sowie 4,4'-Di-(isocyanatocyclohexyl)-methan verwendet. Für die Herstellung von unter Lichteinwirkung nicht vergilbenden Produkten werden vorzugsweise aliphatische Monomere I eingesetzt.

Als Monomere II eignen sich insbesondere zweiwertige Polyetheralkohole wie sie z.B. durch Polymerisation von Ethylenoxid, Propylenoxid, Butylenoxid, Tetrahydrofuran, Styroloxid oder Epichlorhydrin mit sich selbst, z.B. in Gegenwart von Bortrifluorid, oder durch Anlagerung dieser Verbindungen, gegebenenfalls im Gemisch oder nacheinander, an Startkomponenten mit reaktionsfähigen Wasserstoffatomen, wie Amine oder Alkohole, erhältlich sind. Besonders geeignet sind als Monomere II Polyetherdiole, die wenigstens zu 70 Gew.% gleiche oder verschiedene Einheiten der Struktur

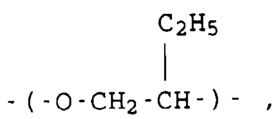 , 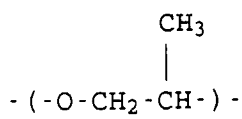 ,

$$-(-O-(CH_2)_4-)- ,$$

enthalten.

Als ionogene Gruppen der Monomeren III werden solche Gruppen betrachtet, die an sich oder nach geeigneter Abwandlung, z.B. durch Neutralisation oder Quaternisierung, in wäßrigem Medium teilweise oder vollständig ionisiert vorliegen, wobei jedoch

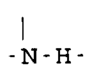 Gruppen

ausgenommen sind. Diese Abwandlung kann in der Regel vor, während und/oder nach der Herstellung des Polyurethans A erfolgen. Vorzugsweise wird nach der Herstellung des Polyurethans A modifiziert.

Beispiele für ionogene Gruppen sind Säurefunktionen wie Carboxyl- oder Sulfonsäuregruppen, die zusätzlich durch Neutralisation mit Basen abgewandelt werden können, oder tertiäre Amine, die quaternisiert oder durch Säurezugabe in Ammoniumionen überführt werden können. Zur Abwandlung ionogener Gruppen durch Neutralisation eignen sich anorganische oder organische Basen wie Alkalimetallhydroxide, Alkalimetallcarbonate, Alkalimetallhydrogencarbonate, Ammoniak oder primäre, sekundäre sowie bevorzugt tertiäre Amine, z.B. Triethylamin, Dimethylaminoethanol oder Dimethylaminopropanol, sowie anorganische oder organische Säuren wie Salzsäure, Essigsäure, Fumarsäure, Maleinsäure, Milchsäure, Weinsäure, Oxalsäure oder Phosphorsäure. Als Quaternisierungsmittel eignen sich Methyljodid, Methylchlorid, Dimethylsulfat, Benzylchlorid, Chloressigsäureethylester oder Bromacetamid.

Vorzugsweise werden als Monomere III 4 bis 10 C-Atomen enthaltende Dihydroxycarbon- oder -sulfonsäure, N-Alkyldialkanolamine wie N-Methyldiethanolamin oder N-Ethyldiethanolamin eingesetzt. Besonders bevorzugt sind 5 bis 10 C-Atome enthaltende Dihydroxycarbonsäuren der allgemeinen Formel

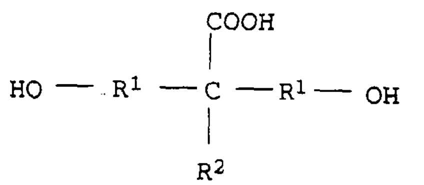

,

wobei $R^1$ eine Alkylen- und $R^2$ eine Alkylgruppe ist, insbesondere Dimethylolpropionsäure. In vorteilhafter Weise enthalten die erfindungsgemäßen Polyurethanzubereitungen Polyurethane A, in denen in der wäßrigen Zubereitung pro Gramm Polyurethan A 0,1 bis 1,2 mMol ionogene Gruppen der eingebauten Monomeren III ionisiert vorliegen.

Als Monomere IV kommen unter anderen 1,2-Ethandiol, 1,2-Propandiol, Butandiole, 1,4-Butendiol, 1,4-Butindiol, Pentandiole, Hexandiole, Octandiole, 1,4-Bishydroxymethylcyclohexan, 2,2-Bis-(4-hydroxycyclohexyl)-propan, 2-Methyl-1,3-propandiol, Glycerin, Trimethylolpropan, 1,2,6-Hexantriol, 1,2-Butantriol, Pentaerythrit, Sorbit, Diethylenglycol, Triethylenglycol, Tetraethylenglycol, Dipropylenglycol sowie Dibutylenglycol in Betracht.

Als gegebenenfalls mitzuverwendende Monomere V sind solche einwertigen Polyetheralkohole von besonderem Interesse, deren zahlenmittleres Molekulargewicht ($\overline{M}_n$) 500 bis 10.000, vorzugsweise 1000 bis 5000 beträgt. Sie sind beispielsweise durch Alkoxylierung von einwertigen Alkanolen wie Methanol, Ethanol oder n-Butanol erhältlich, wobei als Alkoxylierungsmittel z.B. Ethylenoxid oder Propylenoxid verwendet werden. Vorzugsweise beträgt der EThoxylierungsgrad der Monomeren V mehr als 60 Gew.%.

Weitere Beispiele von für den Aufbau der Polyurethane A geeigneten Monomeren I bis V sind z.B. in High Polymers, Vol. XVI, "Polyurethanes, Chemistry and Technology", Interscience Publishers, New York, Bd. I, 1962, S. 32 bis 42, S. 44 bis 54 und Bd. II, 1964, S. 5 bis 6 und S. 198 bis 199 beschrieben.

Vorzugsweise enthalten die Polyurethane A nur solche Monomere I bis IV eingebaut, die zwei Isocyanatgruppen oder zwei alkoholische OH-Gruppen aufweisen. Die Mengen der eingebauten Monomeren I bis V werden mit Vorteil so bemessen, daß das NCO/OH-Äquivalentverhältnis für die eingebauten Monomeren I sowie die OH-Gruppen der eingebauten Monomeren II bis V 0,95 bis 1,0 beträgt.

Die Herstellung der erfindungsgemäßen wäßrigen Polyurethanzubereitungen erfolgt zweckmäßigerweise so, daß man die Monomeren I bis V in der Schmelze oder in Gegenwart eines inerten, mit Wasser mischbaren Lösungsmittels wie Aceton, Tetrahydrofuran, Butanon oder N-Methylpyrrolidon bei Temperaturen von 20 bis 160, bevorzugt 50 bis 100°C umsetzt, wobei die Reaktionsdauer üblicherweise so bemessen wird, daß der Gehalt der Umsetzungsprodukte an nicht umgesetzten NCO-Gruppen, bemessen in Gew.% bezogen auf die Gesamtmenge der Reaktionsmischung (der Begriff Reaktionsmischung bezieht das Lösungsmittel nicht mit ein), nicht mehr als 0,2 Gew.% oberhalb des Wertes liegt, der bei vorgegebener Stöchiometrie bei vollständigem Umsatz erreicht wird. In der Regel werden dafür 2 bis 10 h benötigt. Durch die Mitverwendung von in an sich bekannter Weise katalytisch wirksamen Substanzen wie Dibutylzinndilaurat, Zinn-(II)-octoat oder 1,4-Diazobicyclo-(2,2,2)-octan, normalerweise in Mengen von 10 bis 1000 ppm bezogen auf die Reaktionsmischung, kann die Umsetzung beschleunigt werden. Anschließend wird gegebenenfalls mit einem mit Wasser mischbaren Lösungsmittel verdünnt, ionogene Gruppen der Monomeren III durch Neutralisation oder Quaternisierung gegebenenfalls ionisiert, sowie Wasser zugegeben.

Danach werden üblicherweise die gegebenenfalls mitverwendeten organischen Lösungsmittel abdestilliert, weshalb solche Lösungsmittel bevorzugt sind, deren Siedepunkt unterhalb des Siedepunktes von Wasser liegt. Die zugegebene Wassermenge wird üblicherweise so bemessen, daß die erfindungsgemäßen wäßrigen Polyurethanzubereitungen einen Feststoffgehalt von 10 bis 60 Gew.% aufweisen. Die in den Zubereitungen enthaltenen Polyurethane weisen in N,N-Dimethylformamid (DMF) in der Regel einen K-Wert von 20 bis 60 auf.

Der K-Wert ist eine relative Viskositätszahl, die in Analogie zur DIN 53 726 bei 25°C bestimmt wird. Er enthält die Fließgeschwindigkeit einer 1 gew.%igen Lösung des Polyurethans in DMF, relativ zur Fließgeschwindigkeit von reinem DMF und charakterisiert das mittlere Molekulargewicht des Polyurethans.

Die erfindungsgemäßen wäßrigen Polyurethanzubereitungen eignen sich insbesondere als Haftgrundierung für handelsübliche Zurichtungen auf gefetteten und/oder hydrophobierten Ledern. Bemerkenswerterweise wird dabei die Wirkung der Fettung und/oder Hydrophobierung nicht wesentlich gemindert. Die Mitverwendung niedermolekularer Additive ist nicht erforderlich. Zweckmäßigerweise werden die erfindungsgemäßen wäßrigen Zubereitungen mit einem Feststoffgehalt von 1 bis 20 Gew.% auf die Leder aufgetragen. Das Aufbringen kann in an sich bekannter Weise durch Plüschen, Gießen, Spritzen oder Drucken erfolgen. Anschließend wird die Haftgrundierung, in der Regel bei Temperaturen von 60 bis 80°C getrocknet. Die Auftragsmenge beträgt üblicherweise 1 bis 15 g Trockenmasse/$m^2$. Im Anschluß an die Haftgrundierung wird in an sich bekannter Weise die Zurichtung aufgebracht. Die Zurichtung besteht in der Regel aus mehreren Schichten und wird modischen Erfordernissen entsprechend üblicherweise durch Anfärben mit Pigmenten und/oder löslichen Farbstoffen farbig aufgebracht. Neben diesen farbigen Bestandteilen enthalten die Zubereitungen für die Zurichtung im allgemeinen Bindemittel, z.B. auf der Basis von Polymerisatlösungen oder -dispersionen, sowie Hilfsmittel wie Weichmacher oder Härter, glanzsteigernde oder mattierende Zusätze, Mittel zur Griffverbesserung, Bügelhilfsmittel oder Verlaufshilsfsmittel. Häufig gliedert sich der Aufbau einer Zurichtung in eine oder mehrere Zurichtungsgrundschichten, sowie daran anschließend eine oder mehrere Anschlußschichten (Appretur). Nach dem Auftragen der einzelnen Schichten wird in der Regel getrocknet und gegebenenfalls gebügelt.

Alternativ zu der beschriebenen Ausführungsweise, kann die Lederzurichtung auch so erfolgen, daß die Haftgrundzubereitung nicht für sich, sondern mit der Zubereitung für die erste Zurichtungsgrundschicht gemischt, auf das Leder aufgebracht wird.

Beispiele

Beispiel 1

Herstellung von erfindungsgemäßen wäßrigen Zubereitungen Z1 und Z3 bis Z6

Z1: Eine Mischung aus 34,8 kg 2,4-Diisocyanatotoluol, 8,7 kg 2,6-Diisocyanatotoluol, 200 kg Polypropylenglycol ($\overline{M}_n$ = 2000), 20,1 kg Dimethylolpropionsäure und 0,1 kg Dibutylzinndilaurat wurde während 5 h bei 95°C umgesetzt. Anschließend wurde auf 30°C abgekühlt und der Gehalt an nicht umgesetzten NCO-Gruppen bestimmt: 0,148 Gew.%, bezogen auf die Reaktionsmischung. Danach wurde mit 200 kg Aceton verdünnt und 10,1 kg Triethylamin sowie 625 kg Wasser eingerührt. Nach destillativer Entfernung des Acetons wurde eine ca. 30 gew.%ige klare wäßrige Polyurethanzubereitung erhalten.

Z3: Eine Mischung aus 34,8 kg 2,4-Diisocyanatotoluol, 8,7 kg 2,6-Diisocyanatotoluol, 200 kg Polypropylenglycol ($\overline{M}_n$ 2000), 20,1 kg Dimethylolpropionsäure und 0,1 kg Dibutylzinndilaurat wurde während 5 h bei 95°C umgesetzt. Anschließend wurde auf 30°C abgekühlt und der Gehalt an nicht umgesetzten NCO-Gruppen bestimmt: 0,14 Gew.%, bezogen auf die Reaktionsmischung. Danach wurde mit 200 kg Aceton verdünnt und 15,1 kg Triethylamin sowie 625 kg Wasser eingerührt. Nach destillativer Entfernung des Acetons wurde eine ca. 31 gew.%ige klare wäßrige Polyurethanzubereitung erhalten.

Z4: Eine Mischung aus 34,8 kg 2,4-Diisocyanatotoluol, 8,7 kg 2,6-Diisocyanatotoluol, 200 kg Polytetrahydrofuran ($\overline{M}_n$ = 2000), 20,1 kg Dimethylolpropionsäure und 0,1 kg Dibutylzinndilaurat wurde während 5 h bei 95°C umgesetzt. Anschließend wurde auf 30°C abgekühlt und der Gehalt an nicht umgesetzten NCO-Gruppen bestimmt: 0,18 Gew.%, bezogen auf die Reaktionsmischung. Danach wurde mit 200 kg Aceton verdünnt und 15,1 kg Triethylamin sowie 870 kg Wasser eingerührt. Nach destillativer Entfernung des Acetons wurde eine ca. 24 gew.%ige klare wäßrige Polyurethanzubereitung erhalten.

Z5: Eine Mischung aus 135,8 kg 2,4-Diisocyanatotoluol, 33,9 kg 2,6-Diisocyanatotoluol, 480 kg eines auf Butandiol-1,4 gestarteten Polybutylenoxids ($\overline{M}_n$ = 860), 56,0 kg Dimethylolpropionsäure und 0,1 kg Dibutylzinndilaurat wurde während 5 h bei 95°C umgesetzt. Anschließend wurde auf 30°C abgekühlt und der Gehalt an nicht umgesetzten NCO-Gruppen bestimmt: 0,13 Gew.%, bezogen auf die Reaktionsmischung. Danach wurde mit 600 kg Aceton verdünnt und 41,0 kg Triethylamin sowie 1740 kg Wasser eingerührt. Nach destillativer Entfernung des Acetons wurde eine ca. 30 gew.%ige opake wäßrige Polyurethanzubereitung erhalten.

Z6: Eine Mischung aus 55,6 kg Isophorondiisocyanat, 200 kg Polypropylenglycol ($\overline{M}_n$ = 2000), 20,1 kg Dimethylolpropionsäure und 0,5 kg Dibutylzinndilaurat wurde während 8 h bei 100°C umgesetzt. Anschließend wurde auf 30°C abgekühlt und der Gehalt an nicht umgesetzten NCO-Gruppen bestimmt: 0,18 Gew.%. Danach wurde mit 200 kg Aceton verdünnt und 15,1 kg Triethylamin sowie 870 kg Wasser eingerührt. Nach destillativer Entfernung des Acetons wurde eine ca. 24 gew.%ige klare wäßrige Polyurethanzubereitung erhalten.

Beispiel 2

Anwendung der erfindungsgemäßen wäßrigen Zubereitungen Z1 und Z3 bis Z6 als Haftgrundierung auf hydrophobiertem Rindoberleder (Hydrophobierung auf Basis Siliconöl) und gefettetem Rindnappaleder

A1: Auf hydrophobiertes Rindoberleder wurde eine Haftgrundierung, bestehend aus
168 g Z1 und
832 g Wasser
aufgebracht (ein Spritzauftrag, Trocknen bei 70°C, Auftragasmenge ca. 5 g Trockenmasse/$m^2$).
Anschließend wurde eine handelsübliche Zurichtungsgrundzubereitung, bestehend aus

50 g Lepton® Schwarz (Pigmentzubereitung)
150 g Lepton Binder DL ) Bindemittel auf Basis wäßriger
50 g Corialgrund® IF ) Polymerisatdispersion

und 550 g Wasser
aufgetragen (zwei Spritzaufträge, Trocknen bei 70°C, Bügeln in einer hydraulischen Bügelpresse bei 70°C und 50 bar, zwei weitere Spritzaufträge, Trocknen bei 70°C, Gesamtauftragsmenge: 25 g Trockenmasse/$m^2$) und danach eine handelsübliche Appretur bestehend aus

200 g Corial® Finish EC (Polymerisatlösung als Bindemittel)
100 g Corial Mattlack CMR (Mattierungsmittel)
670 g Corial Verdünner EB (Verlaufshilfsmittel) und
30 g Corial Härter L (Härter)

aufgebracht (ein Spritzauftrag, Trocknen bei 70°C, Auftragsmenge: ca. 8 g Trockenmasse/$m^2$).

A1V: Wie A1, jedoch ohne Haftgrundierung.

A3: Wie A1, jedoch bestand die Haftgrundierung aus
162 g Z3 und
838 g Wasser.

A3V: Wie A3, aber ohne Haftgrundierung.

A4: Wie A1, jedoch bestand die Haftgrundierung aus
209 g Z4 und
791 g Wasser.

A4V: Wie A4, aber ohne Haftgrundierung.

A5: Wie A1, jedoch bestand die Haftgrundierung aus
168 g Z5 und
832 g Wasser.

A5V: Wie A5, jedoch ohne Haftgrundierung.

A6: Wie A1, jedoch bestand die Haftgrundierung aus
209 g Z6 und
791 g Wasser.

A6V: Wie A6, aber ohne Haftgrundierung.

A7: Auf gefettetes Rindnappaleder wurde ein Gemisch aus
50 g Haftgrundierung Z3
und
800 g einer handelsüblichen Zurichtungsgrundzubereitung bestehend aus

100 g Lepton Schwarz (Pigmentzubereitung)
80 g Lepton Wachs A (Bügelhilfsmittel)
100 g Corialgrund IF } Bindemittel auf Basis wäßriger
200 g Lepton Binder LF } Polymerisatdispersionen
und 320 g Wasser

(® = eingetragenes Warenzeichen der BASF AG)

aufgebracht (ein Spritzauftrag, Trocknen bei 70°C, Bügeln in einer hydraulischen Bügelpresse bei 80°C und 50 bar, Auftragsmenge ca. 20 g Trockenmasse/$m^2$). Anschließend wurde die handelsübliche Zurichtungsgrundzubereitung allein (ohne Z3 Zusatz) aufgetragen (zwei Spritzaufträge, Trocknen bei 70°C, Auftragsmenge ca. 30 g Trockenmasse/$m^2$) und danach eine handelsübliche Appretur bestehend aus

50 g Corial Glanzlack FM (Nitrocellulose Lösung als Bindemittel)
50 g Corial Mattlack NW (Mattierungsmittel) und
250 g Corial Verdünner A (Verlaufshilfsmittel)

aufgebracht (ein Spritzauftrag, Trocknen bei 70°C, Auftragsmenge: ca. 8 g Trockenmasse/$m^2$).

A7V: Wie A7, aber ohne Mitverwendung von Z3.

A8: Auf gefettetes Rindnappaleder wurde eine Haftgrundierung, bestehend aus
270 g Z3 und
730 g Wasser, aufgebracht (ein Spritzauftrag, Trocknen bei 70°C, Auftragsmenge ca. 8 g Trockenmasse/$m^2$). Anschließend wurde eine handelsübliche Zurichtungsgrundzubereitung, bestehend aus

50 g Lepton Schwarz (Pigmentzubereitung)
30 g Lepton Wachs A (Bügelhilfsmittel)
180 g Lepton Binder DL } Bindemittel auf Basis wäßriger
70 g Corialgrund IF } Polymerisatdispersionen
und 470 g Wasser

aufgetragen (ein Spritzauftrag, Trocknen bei 70°C, Bügeln in einer hydraulischen Bügelpresse bei 80°C und 50 bar, zwei weitere Spritzaufträge, Trocknen bei 70°C, Gesamtauftragsmenge: ca. 40 g Trockenmasse/$m^2$) und danach eine handelsübliche Appretur bestehend aus

200 g Corial Finish EC (Polymerisatlösung als Bindemittel)
100 g Corial Glanzlack AW (Glanzhilfsmittel)
670 g Corial Verdünner EB (Verlaufshilfsmittel) und
30 g Corial Härter L (Härter)

aufgebracht (zwei Spritzaufträge, Trocknen bei 70°C, Bügeln in einer hydraulischen Bügelpresse bei 80°C und 50 bar, Auftragsmenge: ca. 10 g Trockenmasse/$m^2$).

A8V: Wie A8, aber ohne Haftgrundierung.

Von den so zugerichteten Ledern wurde gemäß IUF 470 (IUF=International Union Fastness, Norm der Internationalen Echtheitskommission für Lederfarbstoffe und gefärbte Leder) die Naß- und Trokkenhaftung der Zurichtung bestimmt. Die Güte der Hydrophobierung wurde gemäß DIN 53338 im Penetrometer bei 15%iger Stauchung ermittelt, wobei bei den zugerichteten Ledern die Zurichtung zuvor aufgerauht worden war. Für das nicht zugerichtete hydrophobierte Rindoberleder wurden auf entsprechende Weise folgende Werte bestimmt:

| | |
|---|---|
| Wasserdurchtrittszeit: | >6 h |
| Wasseraufnahme: | 10 Gew.-% |
| | (nach 6 h, bezogen auf Ausgangsgewicht des Leders). |

Die übrigen Ergebnisse zeigt die Tabelle.

Tabelle

| Anwendungsbeispiel | Haftung (N/cm) trocken / naß | Wasserdurchtrittszeit (h) | Wasserdurchtritt (g/h) | Wasseraufnahme (Gew.-% nach 6 h) |
|---|---|---|---|---|
| A1 | 3,3 / 2,8 | 4 | 0,05 | 11 |
| A1V | 1,3 / 1,7 | >6 | - | 10 |
| A3 | 4,6 / 3,6 | >6 | - | 10 |
| A3V | 1,3 / 1,7 | >6 | - | 10 |
| A4 | 9,6 / 5,1 | >6 | - | 9 |
| A4V | 1,6 / 1,8 | >6 | - | 10 |
| A5 | 3,3 / 2,5 | >6 | - | 10 |
| A5V | 1,6 / 1,8 | >6 | - | 10 |
| A6 | 4,0 / 3,5 | >6 | - | 9 |
| A6V | 1,6 / 1,8 | >6 | - | 10 |
| A7 | 7,5 / 2,5 | | | |
| A7V | 3,5 / 2,0 | | | |
| A8 | 6,6 / 2,8 | | | |
| A8V | 3,0 / 1,8 | | | |

**Patentansprüche**

**1.** Wäßrige Polyurethanzubereitungen, enthaltend 10 bis 60 Gew.-% wenigstens eines Polyurethans A, das aus

a) wenigstens einem organischen Diisocyanat oder einem eine arithmetisch mittlere NCO-Funktionalität von 1,9 bis 2,3 aufweisenden Gemisch aus organischen Isocyanaten [Monomere I],

b) wenigstens einem zweiwertigen Polyetheralkohol eines zahlenmittleren Molekulargewichtes von 500 bis 5000 oder einem eine arithmetisch mittlere Funktionalität an alkoholischen OH-Gruppen von 1,6 bis 2,3 aufweisenden Gemisch aus Polyetheralkoholen eines zahlenmittleren Molekulargewichtes von 500 bis 5000 [Monomere II],

c) wenigstens einem 1 bis 3 alkoholische OH-Gruppen sowie wenigstens eine ionogene Gruppe enthaltenden Alkohol [Monomere III],

d) keinem, einem oder mehreren zweiwertigen Alkoholen eines zahlenmittleren Molekulargewichtes von 62 bis 499 oder einem eine arithmetisch mittlere Funktionalität an alkoholischen OH-Gruppen von 1,9 bis 2,3 aufweisenden Gemisch aus Alkoholen eines zahlenmittleren Molekulargewichtes von 62 bis 499 [Monomere IV] und

e) keinem, einem oder mehreren einwertigen Polyetheralkoholen [Monomere V]

mit der Maßgabe aufgebaut ist, daß die Mengen der eingebauten Monomeren I bis V so bemessen sind, daß die OH/NCO-Äquivalentverhältnisse für die eingebauten

| | |
|---|---|
| Monomere II / Monomere I | 0,2 bis 0,6 |
| Monomere III / Monomere I | 0,2 bis 0,8 |
| Monomere IV / Monomere I | 0 bis 0,2 und |
| Monomere V / Monomere I | 0 bis 0,2 |

betragen, daß die arithmetisch mittlere Funktionalität der insgesamt eingebauten Monomeren I bis V, gemittelt

über die Summe aus den NCO-Gruppen der Monomeren I und den alkoholischen OH-Gruppen der Monomeren II bis V 1,8 bis 2,3 beträgt, daß das NCO/OH-Äquivalentverhältnis für die eingebauten Monomeren I sowie die OH-Gruppen der eingebauten Monomeren II bis V 0,9 bis 1,0 beträgt, daß die Monomeren II einen Ethoxylierungsgrad von weniger als 30 Gew.-% aufweisen, daß die Monomeren V einen Ethoxylierungsgrad von wenigstens 40 Gew.-% aufweisen und daß pro Gramm Polyurethan A in der wäßrigen Zubereitung 0,05 bis 2 mMol ionogene Gruppen der eingebauten Monomeren III ionisiert vorliegen.

**2.** Wäßrige Polyurethanzubereitungen nach Anspruch 1, enthaltend Polyurethane A, an deren Aufbau als Monomere II Polyetherdiole beteiligt sind, die wenigstens zu 70 Gew.-% gleiche oder verschiedene Einheiten der Struktur

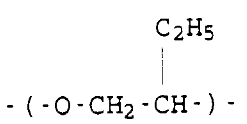 , 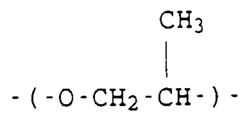 ,

$$-(-O-(CH_2)_4-)- ,$$

enthalten.

**3.** Wäßrige Polyurethanzubereitungen nach Anspruch 1 oder 2, enthaltend Polyurethane A, an deren Aufbau als Monomere III 4 bis 10 C-Atome enthaltende Dihydroxycarbon- oder -sulfonsäuren beteiligt sind.

**4.** Wäßrige Polyurethanzubereitungen nach den Ansprüchen 1 bis 3, enthaltend Polyurethane A, an deren Aufbau als Monomere III Dihydroxycarbonsäuren der allgemeinen Formel

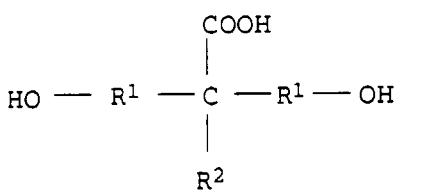 ,

beteiligt sind, wobei $R^1$ eine Alkylen- und $R^2$ eine Alkylgruppe ist und die Gesamtzahl der C-Atome 5 bis 10 beträgt.

**5.** Wäßrige Polyurethanzubereitungen nach den Ansprüchen 1 bis 4, enthaltend Polyurethane A, an deren Aufbau nur solche Monomere I bis IV beteiligt sind, die zwei Isocyanatgruppen oder zwei alkoholische OH-Gruppen aufweisen.

**6.** Wäßrige Polyurethanzubereitungen nach den Ansprüchen 1 bis 5, enthaltend Polyurethane A, deren eingebaute Mengen an Monomeren 1 bis V so bemessen sind, daß das NCO/OH-Äquivalentverhältnis für die eingebauten Monomeren I sowie die OH-Gruppen der eingebauten Monomeren II bis V 0,95 bis 1,0 beträgt.

**7.** Verfahren zur Herstellung von Polyurethanzubereitungen gemäß den Ansprüchen 1 bis 6, dadurch gekennzeichnet, daß man die Monomeren I bis V in der Schmelze oder in Gegenwart eines inerten, mit Wasser mischbaren Lösungmittels bei Temperaturen von 20 bis 160°C so lange umsetzt, bis der Gehalt der Umsetzungsprodukte an nicht umgesetzten NCO-Gruppen, bezogen auf die Gesamtmenge der Reaktionsmischung, nicht mehr als 0,2 Gew.-% oberhalb des vollständigem Umsatz entsprechenden Wertes liegt, anschließend gegebenenfalls mit einem mit Wasser mischbare Lösungsmittel verdünnt sowie gegebenenfalls ionogene Gruppen der Monomeren III durch Neutralisation oder Quaternisierung ionisiert, Wasser zugibt und sodann die gegebenenfalls mitverwendeten organischen Lösungsmittel abdestilliert.

**8.** Verwendung von wäßrigen Polyurethanzubereitungen gemäß den Ansprüchen 1 bis 6 als Haftgrundierung für die Zurichtung von hydrophobierten und/oder gefetteten Ledern.

**9.** Verfahren zur Verbesserung der Haftung von Zurichtungen auf hydrophobierten und/oder gefetten Ledern, dadurch gekennzeichnet, daß eine wäßrige Polyurethanzubereitung gemäß der Ansprüche 1 bis 6 vor oder im Gemisch mit einer Zurichtungsgrundzubereitung auf das Leder aufgebracht wird.

**10.** Zugerichtete hydrophobierte und/oder gefette Leder, die zur Verbesserung der Haftung der Zurichtung mit einer wäßrigen Polyurethanzubereitung gemäß den Ansprüchen 1 bis 6 behandelt worden sind.

**Claims**

**1.** An aqueous polyurethane formulation comprising from 10 to 60% by weight of at least one polyurethane A which is produced from

a) at least one organic diisocyanate or a mixture of organic isocyanates which has an arithmetic mean NCO functionality of from 1.9 to 2.3, [monomer I],
b) at least one dihydric polyether alcohol with a number average molecular weight of from 500 to 5000, or a mixture of polyether alcohols with a number average molecular weight of from 500 to 5000, which has an arithmetic mean functionality of alcoholic OH groups of from 1.6 to 2.3, [monomer II],
c) at least one alcohol containing 1 to 3 alcoholic OH groups and at least one ionic group [monomer III],
d) no, one or more dihydric alcohols with a number average molecular weight of from 62 to 499, or a mixture of alcohols with a number average molecular weight of from 62 to 499, which has an arithmetic mean functionality of alcoholic OH groups of from 1.9 to 2.3, [monomer IV], and
e) no, one or more monohydric polyether alcohols [monomer V]
with the proviso that the amounts of incorporated monomers I to V are such that the OH/NCO equivalent ratio for the incorporated

| | |
|---|---|
| monomer II / monomer I | is from 0.2 to 0.6, |
| monomer III / monomer I | is from 0.2 to 0.8, |
| monomer IV / monomer I | is from 0 to 0.2 and, |
| monomer V / monomer I | is from 0 to 0.2, |

that the arithmetic mean functionality of the total of monomers I to V incorporated, averaged over the total of the NCO groups in monomers I and the alcoholic OH groups in monomers II to V, is from 1.8 to 2.3, that the NCO/OH equivalent ratio for the incorporated monomers I and the OH groups of the incorporated monomers II to V is from 0.9 to 1.0, that the monomers II have a degree of ethoxylation of less than 30% by weight, that the monomers V have a degree of ethoxylation of at least 40% by weight, and that from 0.05 to 2 mmol of ionic groups of the incorporated monomers III are in ionized form per gram of polyurethane A in the aqueous formulation.

**2.** An aqueous polyurethane formulation as claimed in claim 1, comprising polyurethanes A in whose structure polyether diols which contain at least 70% by weight of identical or different units of the structure

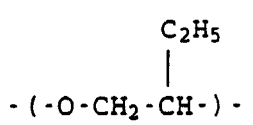 , 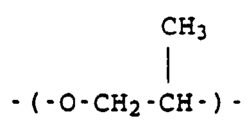 ,

$-(-O-(CH_2)_4-)-$ ,

are involved as monomers II.

**3.** An aqueous polyurethane formulation as claimed in claim 1 or 2, comprising polyurethane A in whose structure dihydroxy carboxylic or sulfonic acids containing 4 to 10 C atoms are involved as monomers III.

**4.** An aqueous polyurethane formulation as claimed in any of claims 1 to 3, comprising polyurethanes A in whose

structure dihydroxy carboxylic acids of the general formula

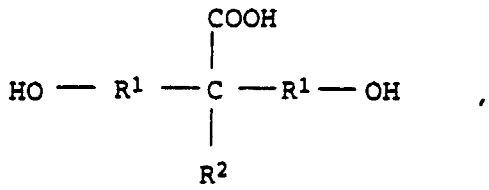

where $R^1$ is an alkylene and $R^2$ is an alkyl group, and the total number of C atoms is from 5 to 10, are involved as monomers III.

5. An aqueous polyurethane formulation as claimed in any of claims 1 to 4, containing polyurethanes A produced only from those monomers I to IV which have two isocyanate groups or two alcoholic OH groups.

6. An aqueous polyurethane formulation as claimed in any of claims 1 to 5, comprising polyurethanes A in which the amounts of monomers I to V incorporated are such that the NCO/OH equivalent ratio for the incorporated monomers I and the OH groups in the incorporated monomers II to V is from 0.95 to 1.0.

7. A process for preparing a polyurethane formulation as claimed in any of claims 1 to 6, which comprises reacting the monomers I to V in the melt or in the presence of an inert, water-miscible solvent at temperatures from 20 to 160°C until the content of unreacted NCO groups in the reaction products, based on the total amount of the reaction mixture, is not more than 0.2% by weight above the value corresponding to complete conversion, subsequently diluting where appropriate with a water-miscible solvent, and where appropriate ionizing ionic groups in monomers III by neutralization or quaternization, adding water and then distilling off the organic solvents which have been used where appropriate.

8. The use of an aqueous polyurethane formulation as claimed in any of claims 1 to 6 as adhesive bottom for finishing water-repellent and/or fatliquored leathers.

9. A process for improving the adhesion of finishes to water-repellent and/or fatliquored leathers, which comprises applying an aqueous polyurethane preparation as claimed in any of claims 1 to 6 before or mixed with a finishing bottom formulation to the leather.

10. A finished water-repellent and/or fatliquored leather which has been treated with an aqueous polyurethane formulation as claimed in any of claims 1 to 6 to improve adhesion of the finish.

## Revendications

1. Préparations aqueuses de polyuréthane, contenant 10 à 60% en poids d'au moins un polyuréthane A construit à partir

   a) d'au moins un diisocyanate organique ou d'un mélange d'isocyanates organiques ayant une fonctionnalité en NCO dont la valeur arithmétique moyenne est de 1,9 à 2,3 (monomères I),
   b) d'au moins un polyétheralcool bifonctionnel ayant une masse moléculaire moyenne en nombre de 500 à 5000 ou d'un mélange de polyétheralcools ayant une fonctionnalité en groupements alcooliques OH dont la valeur arithmétique moyenne est de 1,6 à 2,3 et dont la masse moléculaire moyenne en nombre est de 500 à 5000 (monomères II),
   c) d'au moins un alcool contenant 1 à 3 groupements alcooliques OH ainsi qu'au moins un groupement ionogène (monomères III),
   d) d'aucun, d'un ou de plusieurs alcools bifonctionnels ayant une masse moléculaire moyenne en nombre de 62 à 499 ou d'un mélange d'alcools ayant une fonctionnalité en groupements alcooliques OH dont la valeur arithmétique moyenne est de 1,9 à 2,3 et dont la masse moléculaire moyenne en nombre est de 62 à 499 (monomères IV), et
   e) d'aucun, d'un ou plusieurs polyétheralcools monofonctionnels (monomères V),

étant spécifié que les quantités des monomères I à V incorporés sont déterminées de sorte que les rapports en équivalents OH/NCO s'élèvent, pour les monomères incorporés, à

| | |
|---|---|
| monomères II / monomères I | 0,2 à 0,6 |
| monomères III / monomères I | 0,2 à 0,8 |
| monomères IV / monomères I | 0 à 0,2 et |
| monomères V/ monomères I | 0 à 0,2 |

que la valeur arithmétique moyenne de la fonctionnalité de l'ensemble des monomères I à V incorporés, rapportée à la somme des groupements NCO des monomères I et des groupements alcooliques OH des monomères II à V s'élève de 1,8 à 2,3, que le rapport en équivalents NCO/OH pour les monomères I incorporés ainsi que pour les groupements OH des monomères II à V incorporés s'élève de 0,9 à 1,0, que les monomères II présentent un degré d'éthoxylation inférieur à 30% en poids, que les monomères V présentent un degré d'éthoxylation inférieur à 40% en poids, et que 0,05 à 2 mmoles de groupements ionogènes des monomères III incorporés sont ionisés, par gramme de polyuréthane A dans la préparation aqueuse.

**2.** Préparation aqueuse de polyuréthane selon la revendication 1, contenant des polyuréthanes A à la construction desquels ont participé, en tant que monomères II, des polyétherdiols contenant pour au moins 70% en poids des motifs identiques ou différents de structure

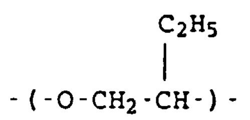 , 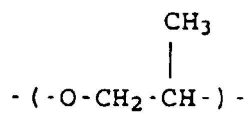 ,

$-(-O-(CH_2)_4-)-$ ,

**3.** Préparation aqueuse de polyuréthane selon la revendication 1 ou 2, contenant des polyuréthanes A à la construction desquels ont participé, en tant que monomères III, des acides dihydroxycarboxyliques ou dihydroxysulfoniques contenant 4 à 10 atomes de carbone.

**4.** Préparation aqueuse de polyuréthane selon l'une quelconque des revendications 1 à 3, contenant des polyuréthanes A à la construction desquels ont participé, en tant que monomères III, des acides dihydroxycarboxyliques de formule générale

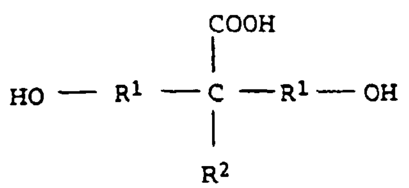 ,

dans laquelle $R^1$ représente un groupement alkylène et $R^2$ représente un groupement alkyle et le nombre total d'atomes de carbone vaut de 5 à 10.

**5.** Préparation aqueuse de polyuréthane selon l'une quelconque des revendications 1 à 4, contenant des polyuréthanes A à la construction desquels n'ont participé que des monomères I à IV qui comportent deux groupements isocyanate ou deux groupements alcooliques OH.

**6.** Préparation aqueuse de polyuréthane selon l'une quelconque des revendications 1 à 5, contenant des polyuréthanes A, dont les quantités incorporées en monomères I à V sont déterminées de telle sorte que le rapport en équivalent NCO/OH pour les monomères I incorporés ainsi que pour les groupements OH des monomères incorporés II à V s'élève de 0,95 à 1,0.

**7.** Procédé de préparation de préparations de polyuréthane selon l'une quelconque des revendications 1 à 6, caractérisé en ce que l'on fait réagir les monomères I à V dans la masse fondue, ou en présence d'un solvant inerte miscible à l'eau, à des températures de 20 à 160°C jusqu'à ce que la teneur des produits réactionnels en groupements NCO n'ayant pas réagi, par rapport à la quantité totale du mélange réactionnel, ne dépasse pas de plus de 0,2% en poids la valeur correspondant à la conversion complète, puis on dilue éventuellement avec un solvant miscible à l'eau et on ionise éventuellement les groupements ionogènes des monomères III par neutralisation ou quaternisation, on ajoute de l'eau et on élimine par distillation les solvants organiques éventuellement utilisés.

**8.** Utilisation de préparations aqueuses de polyuréthane selon l'une quelconque des revendications 1 à 6 en tant qu'apprêt adhérent pour le corroyage de cuirs rendus hydrophobes et/ou nourris.

**9.** Procédé d'amélioration de l'adhérence du corroyage de cuirs rendus hydrophobes et/ou nourris, caractérisé en ce que l'on enduit le cuir avec une préparation aqueuse de polyuréthane selon l'une quelconque des revendications 1 à 6 avant ou en mélange avec une préparation de base de corroyage.

**10.** Cuir corroyé rendu hydrophobe et/ou nourri, traité avec une préparation aqueuse de polyuréthane selon l'une quelconque des revendications 1 à 6, pour l'amélioration de l'adhérence du corroyage.